# FASCICULE DE BREVET EUROPEEN

(11) **EP 0 949 877 B1**
(45) Date de publication et mention de la délivrance du brevet: **26.03.2003**
(21) Numéro de dépôt: 97953985.5
(22) Date de dépôt: 31.12.1997
(51) Int. Cl.: A47J 43/07

(54) **APPAREIL ELECTROMENAGER PORTATIF**
TRAGBARES ELEKTRO-HAUSHALTSGERÄT
PORTABLE HOUSEHOLD APPLIANCE

(30) Priorité: 03.01.1997 FR 9700030
(43) Date de publication de la demande: 20.10.1999
(73) Titulaire: MOULINEX S.A., 75008 Paris (FR)
(72) Inventeur: RADIGUE, Jean-Jacques, F-53100 Mayenne (FR)
(74) Mandataire: Busquets, Jean-Pierre
(86) Numéro de dépôt international: FR9702469
(87) Numéro de publication internationale: WO98029015

(56) Documents cités:
- EP-A- 0 283 642
- DE-B- 1 162 519

## Description

La présente invention se rapporte à un appareil électroménager portatif du type comportant un boîtier à l'intérieur duquel est placé un moteur d'entraînement d'au moins un outil de travail, ledit boîtier comportant une ouverture pour recevoir un bouton-poussoir dont l'actionnement manuel commande la mise sous tension du moteur d'entraînement.

L'invention concerne plus particulièrement, bien que non exclusivement, les appareils électroménagers communément appelés mélangeurs portatifs, pour lesquels l'outil de travail est destiné à mixer ou mélanger des préparations culinaires.

Les normes de sécurité imposent, pour ce type d'appareils, qu'il ne soit pas possible de faire fonctionner l'appareil en appliquant sur le bouton-poussoir un doigt d'épreuve constitué par une sphère de diamètre prédéterminé, égal à 40 millimètres dans le cas de la norme européenne EN 60335-2-14 : 1988/A53:1994, paragraphe 20.102.

Dans les appareils électroménagers portatifs actuellement sur le marché, les boutons-poussoirs comportent généralement une surface formant touche en relief par rapport à l'ouverture du boîtier. La seule façon pour ce type d'appareils de satisfaire aux normes de sécurité précitées est de prévoir que le déplacement du bouton-poussoir, lorsqu'on lui applique le doigt d'épreuve en forme de sphère, soit inférieur au déplacement nécessaire pour établir la mise sous tension du moteur d'entraînement. Il en résulte une construction encombrante du bouton-poussoir à l'intérieur du boîtier.

On pourrait par ailleurs envisager de placer le bouton-poussoir totalement en retrait par rapport à l'ouverture. Cependant, une telle disposition, d'une part, serait inesthétique, et d'autre part, offrirait peu de facilité à l'utilisation. En outre, des projections alimentaires risqueraient de pénétrer beaucoup plus facilement dans le boîtier au travers de l'ouverture, et nuire à terme au bon fonctionnement de l'appareil.

La présente invention a pour but de pallier les inconvénients précédents en proposant un bouton-poussoir de faible encombrement, qui soit de surcroît esthétique, ergonomique, et qui réponde aux exigences imposées par les normes en terme de sécurité.

Ce but est atteint selon l'invention par le fait que l'ouverture présente un rebord périphérique sur lequel la sphère constituant le doigt d'épreuve est susceptible de prendre appui en pénétrant au-delà de l'ouverture sur une zone délimitée par une portion de sphère, le bouton-poussoir comportant par ailleurs une surface formant touche qui présente un contour périphérique affleurant dans le plan de l'ouverture et une partie centrale tels que la surface soit logée dans le boîtier en retrait par rapport à ladite portion de sphère.

Dans un mode de réalisation préféré de l'invention, le rebord périphérique de l'ouverture épouse la forme de la sphère, et/ou la surface formant touche épouse la forme de la portion de sphère.

En conséquence, le doigt d'épreuve en forme de sphère peut venir s'appuyer sur le rebord périphérique, et être au plus tangent à la surface formant touche, sans actionner, c'est-à-dire provoquer le déplacement du bouton-poussoir.

L'invention et les avantages qu'elle procure seront mieux compris au vu de la description suivante d'un mode de réalisation préférentiel de l'invention, appliqué à titre d'exemple à un mixeur plongeant portatif, la description étant faite en référence aux figures annexées dans lesquelles :
- la figure 1 illustre schématiquement un mixeur plongeant portatif conforme à la présente invention;
- la figure 2 illustre une coupe verticale, à une échelle différente, de la partie supérieure du mixeur plongeant représenté sur la figure 1.

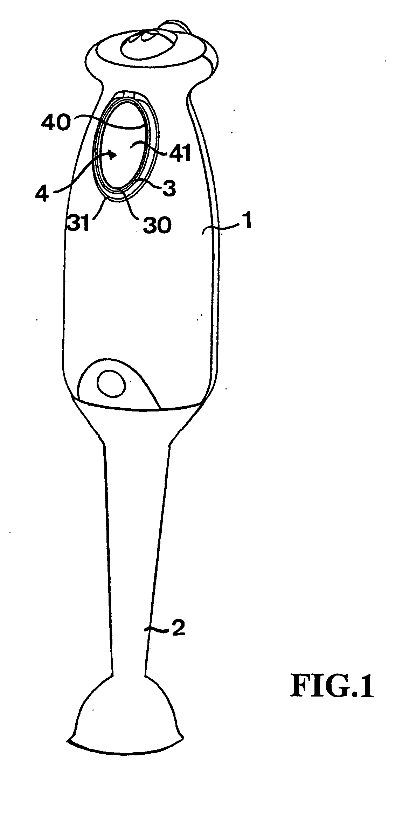

Le mixeur plongeant portatif représenté à titre d'exemple sur les figures comporte classiquement un boîtier 1, de préférence en matière plastique telle qu'un polypropylène, dans le prolongement longitudinal duquel s'étend un pied mixeur constituant un outil de travail destiné à mixer ou mélanger des préparations culinaires, et dont on ne voit que l'enveloppe 2 sur la figure 1. Le boîtier renferme, de manière connue, un moteur d'entraînement (non représenté) de l'outil de travail. Le boîtier comporte en outre une ouverture 3 qui reçoit un bouton-poussoir 4 dont l'actionnement manuel commande la mise sous tension du moteur d'entraînement, comme il sera expliqué plus en détail par la suite.

Comme cela a déjà été mentionné précédemment, les normes de sécurité imposent qu'un doigt d'épreuve en forme de sphère de diamètre prédéterminé, en appui sur le bouton-poussoir, ne puisse pas permettre la mise sous tension du moteur d'entraînement.

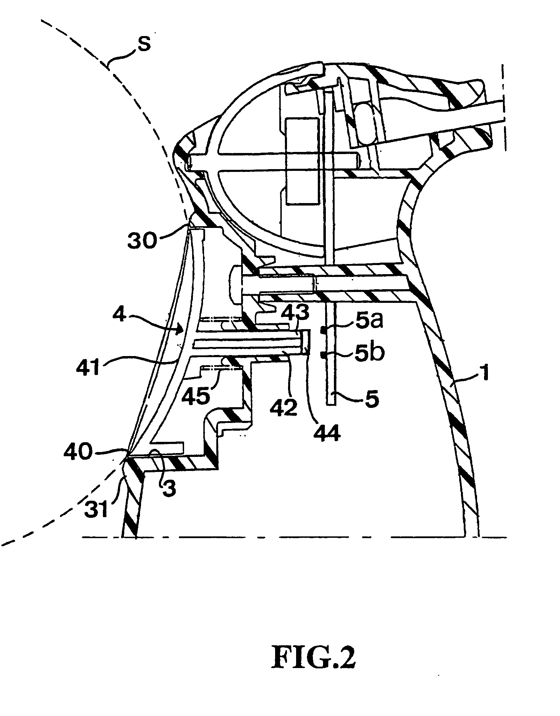

Pour ce faire et conformément à l'invention, l'ouverture 3 recevant le bouton-poussoir est délimitée par un rebord périphérique 30 sur lequel la sphère constituant le doigt d'épreuve est susceptible de prendre appui lors du test de vérification de conformité aux normes de sécurité, comme illustré sur la figure 2 sur laquelle la sphère est représentée partiellement en trait interrompu et référencée par la lettre S. On voit alors que la sphère S va pénétrer au-delà de l'ouverture sur une zone délimitée par une portion de sphère. Toujours selon l'invention, le bouton-poussoir 4 comporte une surface formant touche qui présente un contour périphérique 40 affleurant dans le plan de l'ouverture 3, et une partie centrale 41, ledit contour périphérique 40 et ladite partie centrale 41 étant tels que la surface formant touche qu'ils définissent soit positionnée dans le boîtier 1 en retrait par rapport à la portion de sphère. Il en résulte que tout actionnement du bouton-poussoir 4 par la portion de sphère pénétrant au-delà de l'ouverture 3 se révèle impossible.

De manière avantageuse, comme illustré sur les figures, le rebord périphérique 30 de l'ouverture 3 épouse la forme de la sphère S. En outre, la surface formant touche épouse également de préférence la forme de la portion de sphère. Lors du test du respect de la norme, la sphère S se trouve alors, dans ce cas particulier, tangente au rebord périphérique 30 et à la surface formant touche.

L'ouverture 3 peut avoir une section de forme quelconque, par exemple circulaire, auquel cas la surface formant touche présente la forme d'une calotte sphérique, comme dans le cas des figures., ou bien oblongue . Dans ce dernier cas, la sphère prendra appui sur les parties latérales du rebord périphérique.

En outre, comme le montrent les figures 1 et 2, le rebord périphérique 30 de l'ouverture 3 peut être formé sur le haut d'un bossage 31 faisant saillie par rapport à la surface du boîtier 1.

Les formes données selon l'invention au rebord périphérique 30 et à la surface formant touche confèrent au bouton-poussoir un caractère particulièrement ergonomique puisque le pouce ou l'index d'un utilisateur s'adapte parfaitement à la forme concave de la partie centrale 41 de la touche.

En outre, le fait que le contour périphérique 40 de la surface formant touche soit affleurant dans le plan de l'ouverture 3 évite que des projections alimentaires pénètrent dans le boîtier 1 au travers de l'ouverture 3.

Par ailleurs, la réalisation préférée selon laquelle le rebord périphérique 30 de l'ouverture et la surface formant touche épousent la forme respectivement de la sphère S et de la portion de sphère répond au critère d'esthétisme recherché.

Pour la mise en marche normale de l'appareil, c'est-à-dire par action manuelle sur le bouton-poussoir, on peut prévoir que le bouton-poussoir 4 soit muni d'une tige d'actionnement 42 montée à l'arrière de la surface formant touche, comme l'illustre la figure 2. Cette tige est mobile en translation lors de l'actionnement du bouton-poussoir 4 jusqu'à une position dans laquelle l'extrémité libre 43 de la tige commande la mise sous tension du moteur d'entraînement.

Un ressort de rappel 45 permet de façon connue de ramener le bouton-poussoir 4 dans sa position initiale dès lors que l'utilisateur relâche la pression qu'il exerce sur la surface formant touche.

Dans l'exemple représenté, l'extrémité libre 43 de la tige 42 porte un conducteur électrique 44 qui peut venir relier deux contacts électriques 5a, 5b positionnés sur une plaquette de circuit imprimé 5, en série avec le moteur d'entraînement.

On comprend aisément que la présente invention permet de réduire au minimum la course nécessaire pour que la tige d'actionnement vienne relier les contacts électriques 5a, 5b, et d'optimiser en conséquence l'encombrement du bouton-poussoir à l'intérieur du boîtier 1, notamment dans la région la plus étroite de ce boîtier correspondant à la poignée de l'appareil.

## Revendications

1. Appareil électroménager portatif du type comportant un boîtier (1) à l'intérieur duquel est placé un moteur d'entraînement d'au moins un outil de travail (2), ledit boîtier comportant une ouverture (3) pour recevoir un bouton-poussoir (4) dont l'actionnement manuel commande la mise sous tension du moteur d'entraînement, ledit bouton-poussoir étant tel qu'une sphère (S) de diamètre prédéterminé selon les normes de sécurité en appui sur le bouton-poussoir ne puisse pas entraîner la mise sous tension du moteur d'entraînement,
**caractérisé en ce que** l'ouverture (3) présente un rebord périphérique (30) sur lequel ladite sphère est susceptible de prendre appui en pénétrant au-delà de l'ouverture (3) sur une zone délimitée par une portion de sphère, et **en ce que** le bouton-poussoir (4) comporte une surface formant touche qui présente un contour périphérique (40) affleurant dans le plan de l'ouverture et une partie centrale (41) tels que ladite surface soit logée dans le boîtier (1) en retrait par rapport à ladite portion de sphère.

2. Appareil électroménager selon la revendication 1,
**caractérisé en ce que** le rebord périphérique (30) de l'ouverture (3) épouse la forme de la sphère (S).

3. Appareil électroménager selon l'une quelconque des revendications précédentes,
**caractérisé en ce que la** surface (40,41) formant touche épouse la forme de la portion de sphère.

4. Appareil électroménager selon l'une quelconque des revendications précédentes,
**caractérisé en ce que** l'ouverture (3) est circulaire, et **en ce que** la surface (40,41) formant touche présente la forme d'une calotte sphérique.

5. Appareil électroménager selon la revendication 3,
**caractérisé en ce que** l'ouverture (3) est oblongue.

6. Appareil électroménager selon l'une quelconque des revendications précédentes,
**caractérisé en ce que** le rebord périphérique (30) de l'ouverture (3) et la surface (40,41) formant touche sont dimensionnés de façon à empêcher l'actionnement du bouton-poussoir (4) par appui d'une sphère (S) de 40 millimètres de diamètre.

7. Appareil électroménager selon l'une quelconque des revendications précédentes,
**caractérisé en ce que** le bouton-poussoir (4) comporte une tige d'actionnement (42) montée à l'arrière de la surface formant touche, ladite tige étant mobile en translation lors de l'actionnement manuel du bouton-poussoir jusqu'à une position dans laquelle l'extrémité libre (43) de la tige d'actionnement commande la mise sous tension du moteur d'entraînement.

8. Appareil électroménager selon la revendication 7,
**caractérisé en ce que** l'extrémité libre (43) de la tige d'actionnement (42) porte un conducteur électrique (44) venant relier deux contacts électriques (5a , 5b) en série avec le moteur d'entraînement.

9. Appareil électroménager selon l'une quelconque des revendications précédentes,
**caractérisé en ce que** le rebord périphérique (30) de l'ouverture (3) est formé sur le haut d'un bossage (31) saillant de la surface du boîtier (1).

10. Appareil électroménager selon l'une quelconque des revendications précédentes,
**caractérisé en ce que** l'outil de travail (2) est conçu pour mixer ou mélanger des préparations alimentaires.

## Patentansprüche

1. Tragbares Elektro-Haushaltsgerät vom Typ mit einem Gehäuse (1), in dessen Inneren ein Antriebsmotor für mindestens ein Arbeitswerkzeug (2) angeordnet ist, wobei das Gehäuse eine Öffnung (3) zur Aufnahme eines Druckknopfes (4) aufweist, dessen Betätigung von Hand das Einschalten des Antriebsmotors steuert, wobei der Druckknopf so ausgebildet ist, daß eine Kugel (S) von bestimmtem Durchmesser gemäß den Sicherheitsnormen beim Andruck auf den Druckknopf nicht das Einschalten des Antriebsmotors bewirken kann, **dadurch gekennzeichnet, daß** die Öffnung (3) eine Umfangsrandleiste (30) aufweist, auf der sich die Kugel abstützen kann, indem sie über die Öffnung 3 hinaus über einen durch einen Kugelabschnitt begrenzten Bereich eindringen kann, und daß der Druckknopf (4) eine Betätigungsfläche aufweist, die einen in die Ebene der Öffnung reichenden bündigen Umfangsumriß (40) und einen solchen Mittelteil (41) aufweist, das die Fläche im Gehäuse (1) bezüglich des Kugelabschnitts zurückgezogen sitzt.

2. Elektro-Haushaltsgerät nach Anspruch 1, **dadurch gekennzeichnet, daß** die Umfangsrandleiste (30) der Öffnung (3) der Form der Kugel (S) angepaßt ist.

3. Elektro-Haushaltsgerät nach einem der vorangehenden Ansprüche, **dadurch gekennzeichnet, daß** die Betätigungsfläche (40, 41) der Form des Kugelabschnitts angepaßt ist.

4. Elektro-Haushaltsgerät nach einem der vorangehenden Ansprüche, **dadurch gekennzeichnet, daß** die Öffnung (3) kreisförmig ist und daß die Betätigungsfläche (40, 41) die Form einer Kugelkalotte aufweist.

5. Elektro-Haushaltsgerät nach Anspruch 3, **dadurch gekennzeichnet, daß** die Öffnung (3) länglich ist.

6. Elektro-Haushaltsgerät nach einem der vorangehenden Ansprüche, **dadurch gekennzeichnet, daß** die Umfangsrandleiste (30) der Öffnung (3) und die Betätigungsfläche (40, 41) so dimensioniert sind, daß die Betätigung des Druckknopfes (4) durch Andruck einer Kugel (S) von 40 mm Durchmesser verhindert wird.

7. Elektro-Haushaltsgerät nach einem der vorangehenden Ansprüche, **dadurch gekennzeichnet, daß** der Druckknopf (4) eine an der Rückseite der Betätigungsfläche montierte Betätigungsstange (42) aufweist, die bei der Betätigung des Druckknopfes von Hand bis in eine Stellung verschiebbar ist, in der das freie Ende (43) der Betätigungsstange den Antriebsmotor einschaltet.

8. Elektro-Haushaltsgerät nach Anspruch 7, **dadurch gekennzeichnet, daß** das freie Ende (43) der Betätigungsstange (42) einen elektrischen Leiter (44) trägt, der zum Verbinden von zwei in Reihe mit dem Antriebsmotor liegenden elektrischen Kontakten (5a, 5b) dient.

9. Elektro-Haushaltsgerät nach einem der vorangehenden Ansprüche, **dadurch gekennzeichnet, daß** die Umfangsrandleiste (30) der Öffnung (3) an der Oberseite eines von der Fläche des Gehäuses (1) vorspringenden Vorsprungs (31) ausgebildet ist.

10. Elektro-Haushaltsgerät nach einem der vorangehenden Ansprüche, **dadurch gekennzeichnet, daß** das Arbeitswerkzeug (2) zum Mixen oder Mischen von Nahrungsmittelzubereitungen bestimmt ist.

## Claims

1. A portable electrical domestic appliance, of the type comprising a casing (1), inside which there is mounted a drive motor for at least one working tool (2), the said casing having an aperture (3) for receiving a push button (4), manual actuation of which causes a voltage to be applied to the drive motor, the said push button being such that a sphere (S), having a diameter predetermined in accordance with safety standards, is unable, when in engagement on the push button, to cause a voltage to be applied to the drive motor, **characterised in that** the aperture (3) has a peripheral surround (30) on which the said sphere is adapted to be engaged by extending beyond the aperture (3) over a zone defined by a portion of a sphere, and **in that** the push button (4) has a touch surface which has a flush peripheral contour (40) in the plane of the aperture together with a central portion (41), which are such that the said surface is located with the casing (1) in retracted relation to the said portion of a sphere.

2. An electrical domestic appliance according to Claim 1, **characterised in that** the peripheral surround (30) of the aperture (3) matches the form of the sphere (S).

3. An electrical domestic appliance according to either one of the preceding Claims, **characterised in that** the touch surface (40, 41) matches the form of the portion of a sphere.

4. An electrical domestic appliance according to any one of the preceding Claims, **characterised in that** the aperture (3) is circular, and **in that** the touch surface (40, 41) is in the form of a spherical dish.

5. An electrical domestic appliance according to Claim 3, **characterised in that** the aperture (3) is oblong.

6. An electrical domestic appliance according to any one of the preceding Claims, **characterised in that** the peripheral surround (30) of the aperture (3) and the touch surface (40, 41) are dimensioned in such a way as to prevent actuation of the push button (4) by application of a sphere (S) 40 millimetres in diameter.

7. An electrical domestic appliance according to any one of the preceding Claims, **characterised in that** the push button (4) has an actuating stem (42) located behind the touch surface, the said stem being movable longitudinally when the push button is operated manually to a position in which the free end (43) of the actuating stem causes a voltage to be applied to the drive motor.

8. An electrical domestic appliance according to Claim 7, **characterised in that** the free end (43) of the actuating stem (42) carries an electrical conductor (44) for connecting two electrical contacts (5a, 5b) in series with the drive motor.

9. An electrical domestic appliance according to any one of the preceding Claims, **characterised in that** the peripheral surround (30) of the aperture (3) is defined on the summit of a bead (31) projecting from the surface of the casing (1).

10. An electrical domestic appliance according to any one of the preceding Claims, **characterised in that** the working tool (2) is designed for mixing or blending food products.
